# EUROPEAN PATENT APPLICATION

(11) **EP 1 903 431 A2**
(43) Date of publication of application: **26.03.2008**
(21) Application number: 07109877.6
(22) Date of filing: 08.06.2007
(51) Int. Cl.: G06F 3/14, G09G 5/00

(54) **Display system with plural displays, display apparatus and display method thereof**

(30) Priority: 22.09.2006 KR 20060092499
(71) Applicant: Samsung Electronics Co., Ltd., Suwon-si, Gyeonggi-Do (KR)
(72) Inventor: Cho, Cheon-yong, Yongin-si Gyeonggi-do (KR); Srivastava, Hemanshu, Uttar Pradesh (IN); Baek, Joung-hum, Hwaseong-si Gyeonggi-do (KR); Bae, Jong-hwa, Gyeonggi-do (KR); Choi, Jin-wook, Suwon-si Gyeonggi-do (KR)
(74) Representative: D'Halleweyn, Nele Veerle Trees Gertrudis

(57) **Abstract**

A display system (110) includes a host apparatus (120) that generates a main image signal and a sub image signal; a compressor (225) that compresses the sub image signal generated by the host apparatus; a primary display (131) that displays an image based on the main image signal generated by the host apparatus; and a secondary display (32) that receives the sub image signal compressed by the compressor according to a general-purpose data communication standard, expands the received sub image signal, and displays an image based on the expanded sub image signal. The compressor is located either in the host apparatus or in the primary display. The secondary display receives the sub image signal either from the primary display or directly from the host apparatus. With this configuration, expenses incurred for display of an image on an additional display apparatus can be minimized.

## Description

### BACKGROUND OF INVENTION

### Field of Invention

The present invention relates to a display apparatus and a method for displaying images generated by a host apparatuses such as a PC or a settop box.

### Description of the Related Art

A display system comprising a display apparatus, such as a monitor, and a host apparatus, such as a personal computer (PC), displays an image on the display apparatus based on an image signal generated and processed by the host apparatus. Typically, in displaying the image on the display apparatus, the host apparatus has a graphic processing unit, such as a graphic card, in correspondence to the display apparatus.

The graphic processing unit performs a graphic process for the image signal generated and processed by an operating system (OS) of the host apparatus. The graphic process performed by the graphic processing unit includes adjustment of resolution and so forth. The graphic processing unit includes a graphic card, a video card, a video adaptor and the like. The graphic processing unit may be embodied by the form of a separate card inserted in an extension slot of a motherboard (not shown) of the host apparatus or may be built in the motherboard. In any case, the operating system requires the graphic processing unit, such as the graphic card, to be installed so that the graphic process can be efficiently performed.

On the other hand, the display system may have a plurality of display apparatuses in order to display a variety of images to user's taste. Among the plurality of display apparatuses, the display apparatus on which the main image is displayed is referred to as the "primary display," and a display apparatus on which a sub image is displayed is referred to as a "secondary display."

Conventionally, the primary display and the secondary display require their respective graphic processing units to display the main image and the sub image, respectively. These graphic processing units may be embodied by, for example, a single graphic card having a dual port, or two graphic cards corresponding to the primary display and the secondary display, respectively. However, the cost efficiency may not be maximized to have a plurality of graphic cards or the single graphic card having the dual port have to be installed in order to display the main image and the sub image on the primary and secondary displays, respectively.

In particular, for images to be displayed on the primary display and the secondary display, while there are some cases where a relatively high degree of graphic processing is required, such as a moving picture, a 3D graphic and the like, there are other cases where a relatively low graphic processing is sufficient, such as a picture, a photograph, a text, a messenger picture and the like. However, it is wasteful to provide the graphic card having the dual port or an additional graphic card in displaying images that can be formed by a relatively low graphic processing on the secondary display.

On the other hand, the host apparatus exchanges image signals with the display apparatus according to video standards such as Video Graphic Array (VGA), Digital Video Interface (DVI) or the like. Accordingly, both of the host apparatus and the display apparatus has to have a video connector, such as a VGA connector, a DVI connector or the like, according to the video standards. Thus, in order to connect a plurality of display apparatus to a host apparatus in the related art, a plurality of video connectors are needed on the host side such as a graphic card having a dual port, or two graphic cards.

### SUMMARY OF THE INVENTION

Accordingly, it is an aspect of the present invention to provide a display system, a display apparatus, and a display method, which are capable of minimizing expenses incurred for display of an image on an additional display apparatus.

Another aspect of the present invention is to provide a display system, a display apparatus, and a display method, which are capable of reducing requirements for display of an image on an additional display apparatus.

Additional aspects of the present invention will be set forth in part in the description which follows and, in part, will be obvious from the description, or may be learned by practice of the present invention.

The foregoing and/or other aspects of the present invention can be achieved by providing a display system comprising: a host apparatus that generates a main image signal and a sub image signal; a compressor that compresses the sub image signal generated by the host apparatus; a primary display that displays an image based on the main image signal generated by the host apparatus; and a secondary display that receives the sub image signal compressed by the compressor according to a general-purpose data communication standard, expands the received sub image signal, and displays an image based on the expanded sub image signal.

Preferably, the general-purpose communication standard comprises a USB protocol.

Preferably, the compressor is provided in the host apparatus, and the secondary display is directly connected to the host apparatus to receive the compressed sub image signal.

Preferably, the compressor is provided in the host apparatus, the host apparatus transmits the generated main image signal and the compressed sub image signal to the primary display, and the secondary display receives the compressed sub image signal via the primary display.

Preferably, the compressor is provided in the primary display, and the secondary display receives the compressed sub image signal via the primary display.

Preferably, image data included in the main image signal is same as image data included in the sub image signal.

Preferably, image data included in the main image signal is different from image data included in the sub image signal.

Preferably, the host apparatus comprises: an image signal generating part that generates the main image signal and the sub image signal; a primary graphic processing unit that performs a graphic process for the main image signal; and a secondary graphic processing unit that performs a graphic process for the sub image signal by executing a software program.

Preferably, the host apparatus further comprises an information storing part that stores system registration information, and the secondary graphic processing unit stores system registration information of the secondary graphic processing unit in the information storing part so that the image signal generating part recognizes the secondary graphic processing unit as a physical device.

The foregoing and/or other aspects of the present invention can be also achieved by providing a display method of displaying an image on a primary display and a secondary display based on a main image signal and a sub image signal, respectively, which are generated in a host apparatus, comprising: compressing the generated sub image signal; receiving the compressed sub image signal in the secondary display according to a general-purpose data communication standard; expanding the received sub image signal in the secondary display; and displaying an image based on the expanded sub image signal.

Preferably, the compressing the generated sub image signal is performed by the host apparatus, and the receiving the compressed sub image signal includes receiving the compressed sub image signal in the secondary display directly connected to the host apparatus.

Preferably, the compressing the generated sub image signal is performed by the host apparatus, the display method further includes transmitting the generated main image signal and the compressed sub image signal from the host apparatus to the primary display, and the receiving the compressed sub image signal includes receiving the compressed sub image signal in the secondary display via the primary display.

Preferably, the compressing the generated sub image signal is performed by the primary display, and the receiving the compressed sub image signal includes receiving the compressed sub image signal in the secondary display via the primary display.

Preferably, the sub image signal is graphically processed by executing a software program in the host apparatus.

The foregoing and/or other aspects of the present invention can be also achieved by providing a display apparatus of a host apparatus that generates a main image signal and a sub image signal, comprising: a signal receiving part that receives the sub image signal generated by the host apparatus in a compressed format according to a general-purpose data communication standard; an expander that expands the compressed sub image signal received by the signal receiving part; and a displaying part that displays an image based on the image signal expanded by the expander.

Preferably, the sub image signal is compressed by the host apparatus, and the signal receiving part is directly connected to the host apparatus to receive the compressed sub image signal.

Preferably, the sub image signal is compressed by the host apparatus and then is transmitted to the primary display, and the signal receiving part receives the compressed sub image signal via the primary display.

Preferably, the sub image signal is compressed by the primary display, and the signal receiving part receives the compressed sub image signal via the primary display.

The foregoing and/or other aspects of the present invention can be also achieved by providing a display apparatus of a host apparatus that generates a main image signal corresponding to a main image displayed on the display apparatus and a sub image signal corresponding to a sub image displayed on a secondary display, comprising: a signal receiving part that receives the main image signal generated by the host apparatus and receives the sub image signal generated by the host apparatus in a compressed format; a displaying part that displays an image based on the main image signal received by the signal receiving part; and a signal transmitting part that transmits the compressed sub image signal received by the signal receiving part to the secondary display according to a general-purpose data communication standard.

The foregoing and/or other aspects of the present invention can be also achieved by providing a display apparatus of a host apparatus that generates a main image signal corresponding to a main image displayed on the display apparatus and a sub image signal corresponding to a sub image displayed on a secondary display, comprising: a signal receiving part that receives the main image signal and the sub image signal, which are generated by the host apparatus; a displaying part that displays an image based on the main image signal received by the signal receiving part; a compressor that compresses the sub image signal received by the signal receiving part; and a signal transmitting part that transmits the sub image signal compressed by the compressor to the secondary display according to a general-purpose data communication standard.

Preferably, the general purpose communication standard is the USB.

Preferably, the general purpose communication standard is the IEEE 1394.

Preferably, the compression standard is an MPEG-2 standard.

Preferably, the compression standard is an MPEG-4 standard.

Preferably, the compression standard is an H.264 standard.

The foregoing and/or other aspects of the present invention can be also achieved by providing a display apparatus capable of being connected to a host apparatus which generates an image signal displayable on the display apparatus comprising: a signal receiving part having a port for receiving an image signal generated by the host apparatus by utilizing a general purpose interface standard; a display driver that processes the received image signal to be displayed on a display part; and a display part for displaying the image signal in accordance with an output of the display driver.

Preferably, the general purpose interface standard is the USB standard.

Preferably, the general purpose interface standard is the IEEE 1392 standard.

Preferably, the host apparatus is a computer having an operating system.

Preferably, the computer is a PC.

Preferably, the host apparatus is a settop box.

Preferably, the received image signal is a compressed image signal.

Preferably, the compressed image signal is compressed in accordance with one of the MPEG-2, MPEG-4 or H.263 standard.

The foregoing and/or other aspects of the present invention can be also achieved by providing a host apparatus for generating image signal comprising: an image signal generating part; a virtual graphics driver for processing the image signal generated by the image signal generating part; a port that transmits the processed image signal, the processed image signal capable of being viewed on an external display apparatus; and an port controller that controls the port to transmit the image signal; wherein a general purpose communication standard is utilized to transmit the image signal.

Preferably, the general purpose communication standard is one of the USB or IEEE-1394 standard.

Preferably, another image signal is generated by the image signal generating part and the another image signal is simultaneously output with the image signal.

Preferably, the image signal is output via one of the USB and/or IEEE 1394 port and the another image signal is output via one of the DSUB, DVI and/or HDMI video port.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a view showing a configuration of a display system according to an exemplary embodiment of the present invention;
FIG. 2 is a block diagram of the display system according to the exemplary embodiment of the present invention;
FIG. 3 is a flow chart illustrating a display method according to an exemplary embodiment of the present invention;
FIG. 4 is a view showing a configuration of a display system according to another exemplary embodiment of the present invention;
FIG. 5 is a block diagram of the display system according to the another exemplary embodiment of the present invention;
FIG. 6 is a block diagram of a display system according to still another exemplary embodiment of the present invention; and
FIGs. 7 and 8 are flow charts illustrating a display method according to another exemplary embodiment of the present invention.

### DETAILED DESCRIPTION OF EXEMPLARY EMBODIMENTS OF THE INVENTION

Reference will now be made in detail to the embodiments of the present invention, examples of which are illustrated in the accompanying drawings, wherein like reference numerals refer to like elements throughout. The embodiments are described below so as to explain the present invention by referring to the figures.

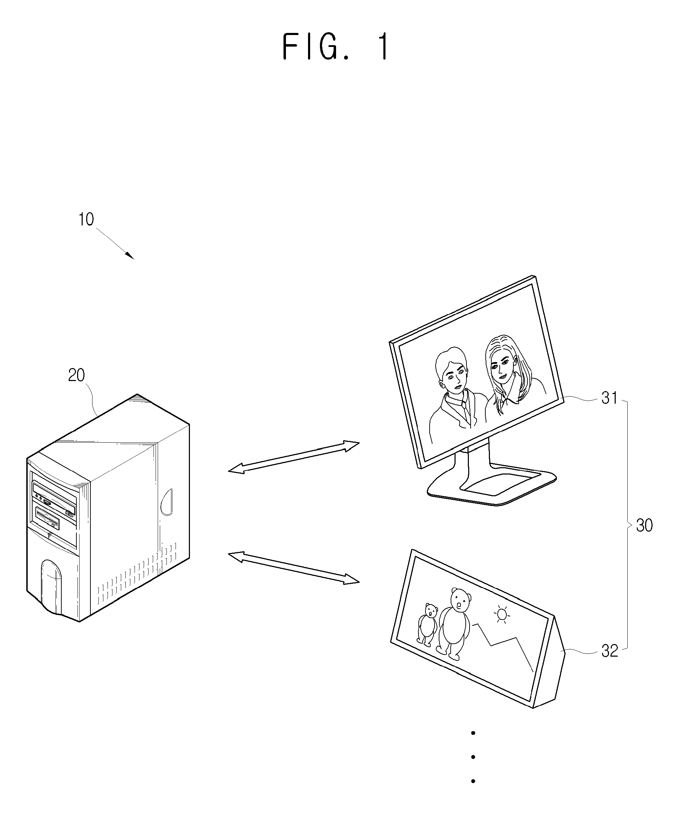

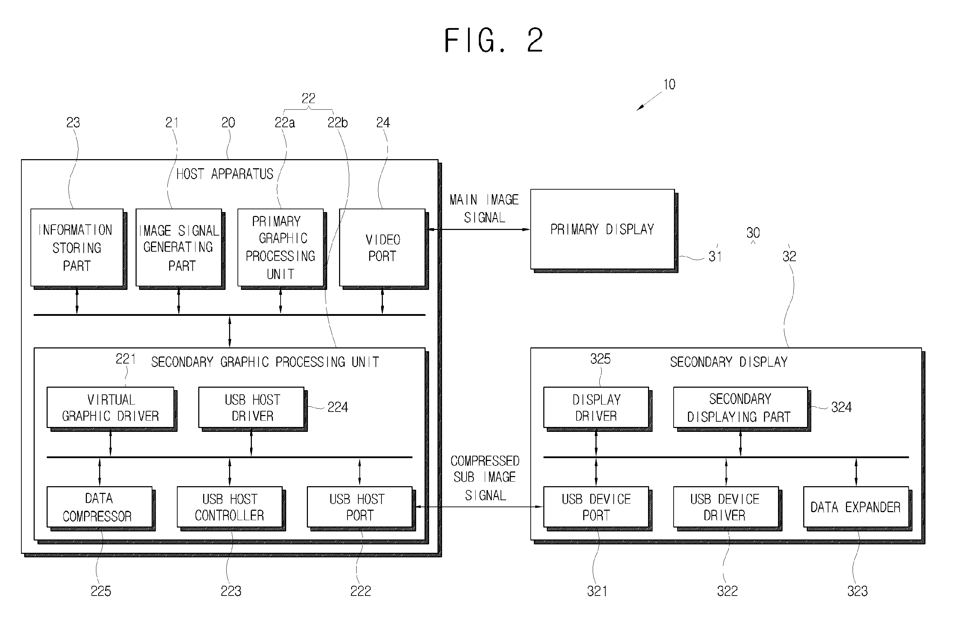

FIG. 1 is a view showing a configuration of a display system 10 according to an exemplary embodiment of the present invention, and FIG. 2 is a block diagram of the display system 10 according to the exemplary embodiment of the present invention.

The display system 10 comprises a host apparatus 20 and a plurality of display apparatuses 30. The host apparatus 20 generates an image signal, performs a graphic process for the generated image signal, and transmits the processed image signal to the plurality of display apparatuses 30. The plurality of display apparatuses 30 comprises a primary display 31 and a secondary display 32. A main image is displayed on the primary display 31 and a sub image is displayed on the secondary display 32. The host apparatus 20 may be embodied by a computer system such as a PC, and the plurality display apparatuses 30 may be embodied by LCD monitors or the like. The host apparatus may be other types of devices capable of generating images for viewing on an external display apparatus such as settop boxes and etc.

The host apparatus 20 comprises an image signal generating part 21, a plurality of graphic processing units 22, an information storing part 23, and a video port 24. The image signal generating part 21 generates image signals of images to be displayed on the primary display 31 and the secondary display 32, respectively. The image signals corresponding to the primary display 31 and the secondary display 32 are also called a "main image signal" and a "sub image signal," respectively. The image signal generating part 21 may operate under support of an operating system (OS) (not shown) having a graphics device interface (GDI) (not shown) that provides functions required to generate the image signals. Images displayed based on the image signals may be images displayed by the OS itself, such as a background picture, a Windows explorer and the like, or images displayed by an application programs, such as a moving picture, a messenger picture and the like. In addition, image data included in the main image signal may be equal to or different from image data included in the sub image signal. It is preferable but not necessary that the host apparatus 20 may further comprise a CPU (not shown), a ROM (not shown), a RAM (not shown), a hard disk driver (not shown), an I/O controller (not shown) and the like for execution of the OS and the application programs.

The plurality of graphic processing units 22 comprises a primary graphic processing unit 22a and a secondary graphic processing unit 22b. The primary graphic processing unit 22a and the secondary graphic processing unit 22b correspond to the primary display 31 and the secondary display 32, respectively. The primary graphic processing unit 22a and the secondary graphic processing unit 22b perform a graphic process for the image signals generated by the image signal generating part 21.

The OS of the host apparatus 20 requires the graphic processing units 22 to be installed so that the graphic process can be efficiently performed. Specifically, when the OS is booted, the OS checks whether or not the graphic processing units 22 are properly installed by referring to system registration information stored in the information storing part 23. The system registration information comprises information related to model names of the graphic processing units 22, supported resolution, supported functions and the like. If the OS determines that the graphic processing units 22 are proper, based on the system registration information, the OS outputs the generated image signals to the graphic processing units 22.

The primary graphic processing unit 22a may be embodied by a separate graphic card as a physical hardware or may be built in a chipset (not shown) of a motherboard (not shown) on which the image signal generating part 21 is mounted. The primary graphic processing unit 22a transmits the image signal generated by the image signal generating part 21 to the primary display 31 via the video port 24. The video port 24 conforms to video interface standards such as DSUB, DVI, HDMI or the like.

The secondary graphic processing unit 22b is embodied by the form of a so-called virtual graphics card. The secondary graphic processing unit 22b comprises a virtual graphics driver 221. The virtual graphics driver 221 registers the secondary graphic processing unit 22b by storing system registration information of the secondary graphic processing part 22b required by the OS in the information storing part 23. Thus, the OS recognizes the secondary graphic processing part 22b as an actual physical graphic processing unit. In addition, the virtual graphics driver 221 performs a graphic process for the image signals generated by the image signal generating part 21 based on a software program. The graphic process performed by the virtual graphics driver 221 includes adjustment of resolution of images and so on. Since the graphic process is performed by software, it is preferable but not necessary that the graphic processing is of a relatively low level of processing. It is preferable but not necessary that the software program of the virtual graphics driver 221 is built in the hard disk driver of the host apparatus 20 and is executed by the CPU of the host apparatus 20.

In other words, in this embodiment, since the image signals generated by the image signal generating part 21 are transmitted via the secondary graphic processing unit 22b as the virtual graphics card, there is no need to provide an actual graphic card in order to display an image on the additional secondary display 32, thereby minimizing costs.

On the other hand, the secondary graphic processing unit 22b converts the sub image signal having a video format into an image signal which can be transmitted according to a general-purpose data communication standard. In this embodiment, the video format includes the format of an RGB signal and the general-purpose data communication standard includes a USB protocol. The secondary graphic processing unit 22b compresses data of the sub image signal in order to transmit the sub image signal of the RGB format (typical using 15 pins in case of a VGA connector), which comprises a plurality of component signal such as an RGB color signal, a H/V synchronization signal and the like, via four pins of a USB connector (not shown).

Specifically, the secondary graphic processing unit 22b further comprises at least one USB port 222, a USB host controller 223, a USB host driver 224 and a data compressor 225. The USB host controller 223 transmits the image signals generated by the image signal generating part 21 to the secondary display 32 via the USB port 222 according to the USB protocol. The USB host driver 224 interfaces the USB host controller 223 so that the image signals can be transmitted via the USB port 222 to which the secondary display 32 is connected. It should be noted that other types of general purpose data interface standard may be used in the present invention such as IEEE 1394 (firewire) or other types.

The data compressor 225 reduces the amount of data by compressing data of the image signals generated by the image signal generating part 21. Thus, a data transfer speed can be maximized when the image signals are transmitted via the USB port 222. It is preferable but not necessary that the data compressor 225 uses a data compression method such as a run length encoding (RLE), MPEG-2, MPEG-4, H.264 or other types of encoding method.

In other words, in this embodiment, since the sub image signal of the video format generated by the image signal generating part 21 is transmitted via the USB port 222 based on the general-purpose data communication standard, which is widely being used for transfer of general data, there is no need to provide a video connector, such as a VGA connector or a DVI connector, according to video standards, thereby reducing hardware requirements to transfer a plurality of image signals, for example such as providing a graphic card having two video outputs or additional graphic cards.

The secondary display 32 comprises a USB device port 321, a USB device driver 322, a data expander 323, a secondary displaying part 324 and a display driver 325. An image signal transmitted from the host apparatus 20 is transmitted to the secondary display 32 via the USB device port 321. The USB device driver 322 collects and assembles data received via the USB device port 321.

The data expander 323 expands the compressed and assembled data to restore an original image signal, that is, the image signal of the video format. The display driver 325 drives the secondary displaying part 324 to display an image based on the restored image signal. The secondary displaying part 324 may comprise an LCD panel. The USB device port 321 and the USB device driver 322 are provided as an example of a signal receiving part of the secondary display, the data expander 323 is provided as an example of an expander of the secondary display, and the secondary displaying part 324 and the display driver 325 are provided as an example of a displaying part of the secondary display.

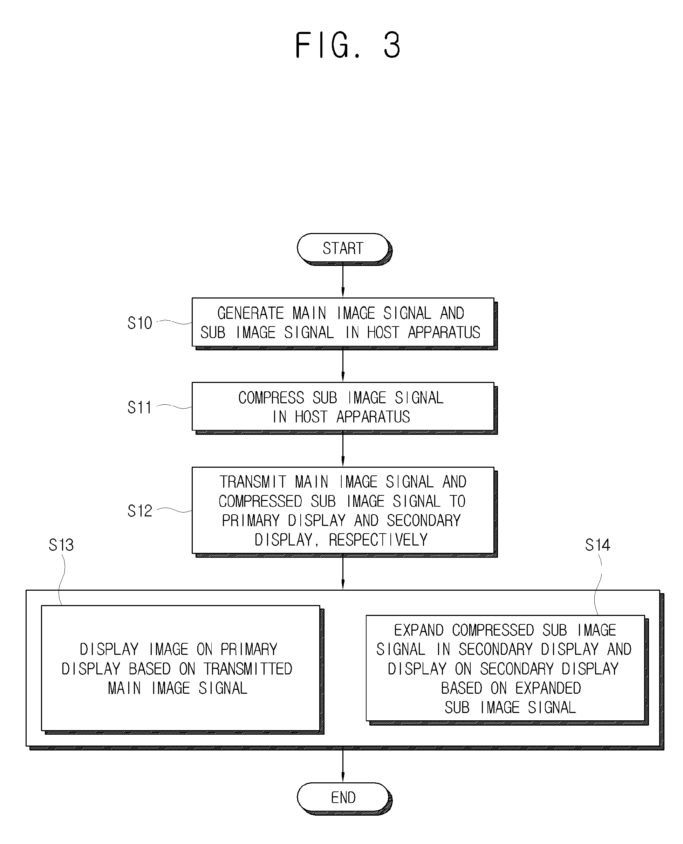

FIG. 3 is a flow chart illustrating a display method of the display system 10 according to an exemplary embodiment of the present invention. First, the host apparatus 20 generates the main image signal and the sub image signal corresponding to the primary display 31 and the secondary display 32, respectively at operation S10. The main image signal and the sub image signal may have the same video format as an RGB signal. Next, the host apparatus 20 compresses the sub image signal at operation S11. Next, the host apparatus 20 transmits the main image signal and the compressed sub image signal to the primary display 31 and the secondary display 32, respectively at operation S12. In this case, the sub image signal is transmitted according to a general-purpose data communication standard.

Next, the primary display 32 displays an image based on the transmitted main image signal at operation S13. On the other hand, the secondary display 32 expands the compressed sub image signal and displays an image based on the expanded sub image signal at operation S14.

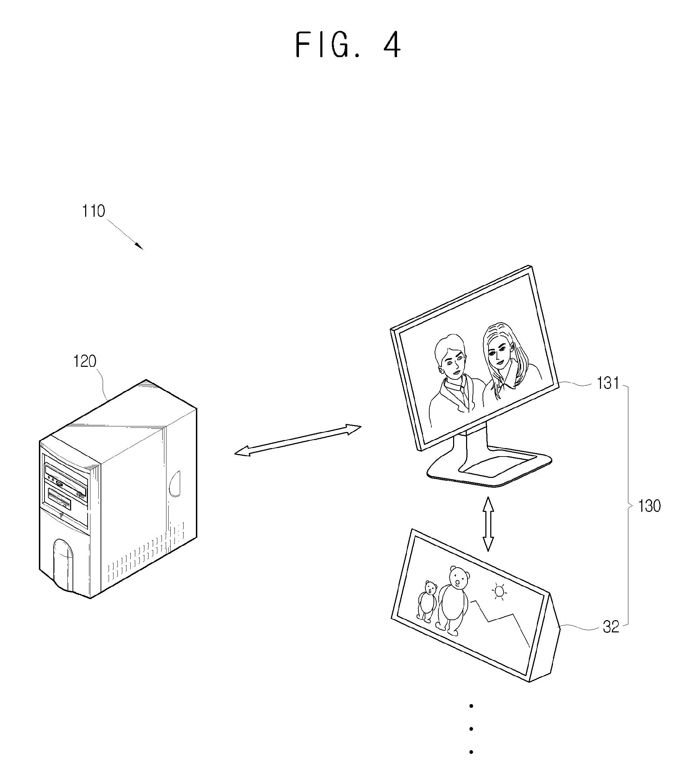

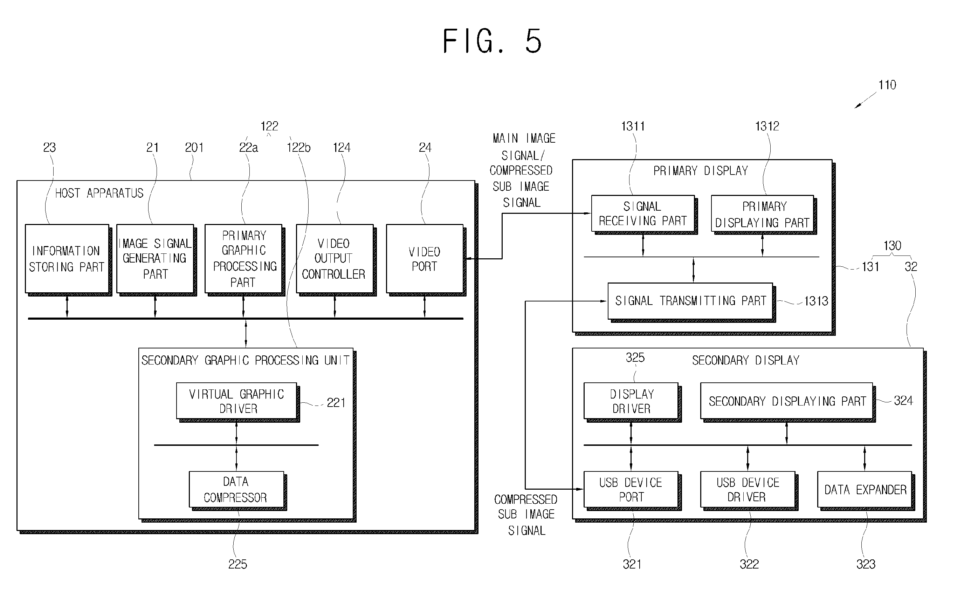

Now, another embodiment of the present invention will be described. FIG. 4 is a view showing a configuration of a display system 110 according to another exemplary embodiment of the present invention, and FIG. 5 is a block diagram of the display system 110 according to the another exemplary embodiment of the present invention. In this embodiment, the same elements denoted by the same reference numerals as the above-described embodiment have the same operation and functions as the above-described embodiment, and therefore, only differences therebetween will be described.

The display system 110 comprises a host apparatus 201 and a primary display 131. A secondary display 32 is connected to the host apparatus 201 not directly but indirectly via the primary display 131.

The host apparatus 201 comprises a graphic processing unit 122. The graphic processing unit 122 comprises a secondary graphic processing unit 122b. The secondary graphic unit 122b comprises a virtual graphics driver 221 and a data compressor 225, and may not include the USB host port 222, the USB host controller 223 and the USB host driver 224, which are shown in FIG. 2.

The host apparatus 201 further comprises a video output controller 124. The video output controller 124 transmits a main image signal processed by a primary graphic processing unit 22a, along with a sub image signal compressed by the secondary graphic processing unit 122b, to the primary display 131 via a video port 24. For example, if the video port 24 is DE-15 as a VGA connector, the main image signal may be transmitted along with the compressed sub image signal via several reserved pins.

The primary display 131 comprises a signal receiving part 1311, a primary displaying part 1312 and a signal transmitting part 1313. The signal receiving part 1311 receives the main image signal and the compressed sub image signal from the host apparatus 201. The primary displaying part 1312 displays an image based on the main image signal received by the signal receiving part 1311. The signal transmitting part 1313 transmits the compressed sub image signal received by the signal receiving part 1311 to the secondary display 32 according a general-purpose data communication standard. It is preferable but not necessary that the signal transmitting part 1313 comprises a USB port (not shown) and a USB controller (not shown).

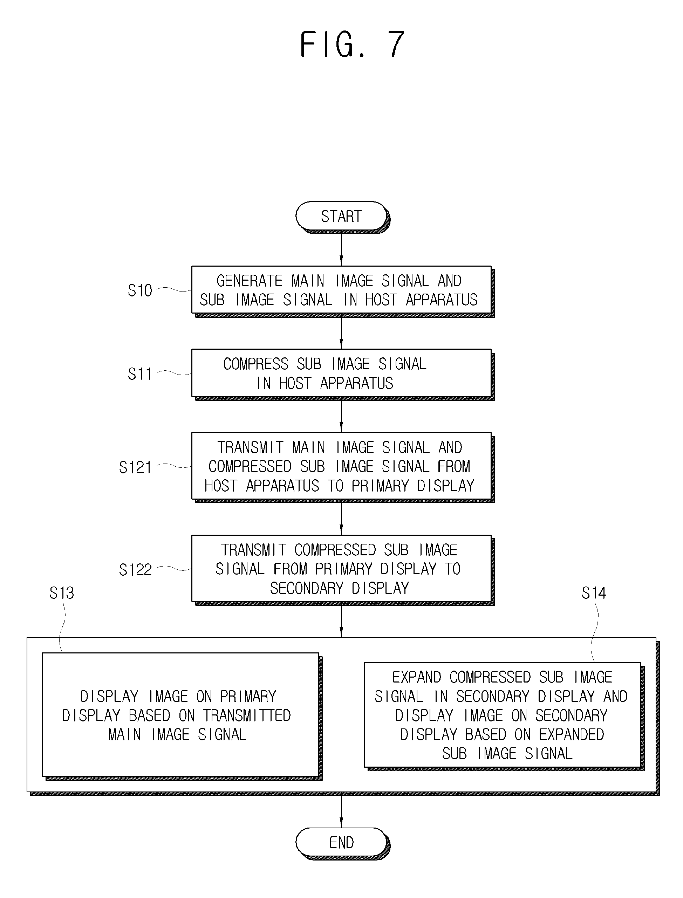

FIG. 7 is a flow chart illustrating an operation of the display system 110 shown in FIGs. 4 and 5. First, the host apparatus 201 generates the main image signal and the sub image signal corresponding to the primary display 131 and the secondary display 32, respectively at the operation S10. Next, the host apparatus 201 compresses the sub image signal at the operation S11. Next, the host apparatus 201 transmits the main image signal and the compressed sub image signal to the primary display 131 at operation S121. Next, the primary display 131 transmits the compressed sub image signal to the secondary display 32 according to a general-purpose data communication standard at operation S122. Next, the primary display 131 displays an image based on the transmitted main image signal at the operation S13. On the other hand, the secondary display 32 expands the compressed sub image signal and displays an image based on the expanded sub image signal at the operation S14.

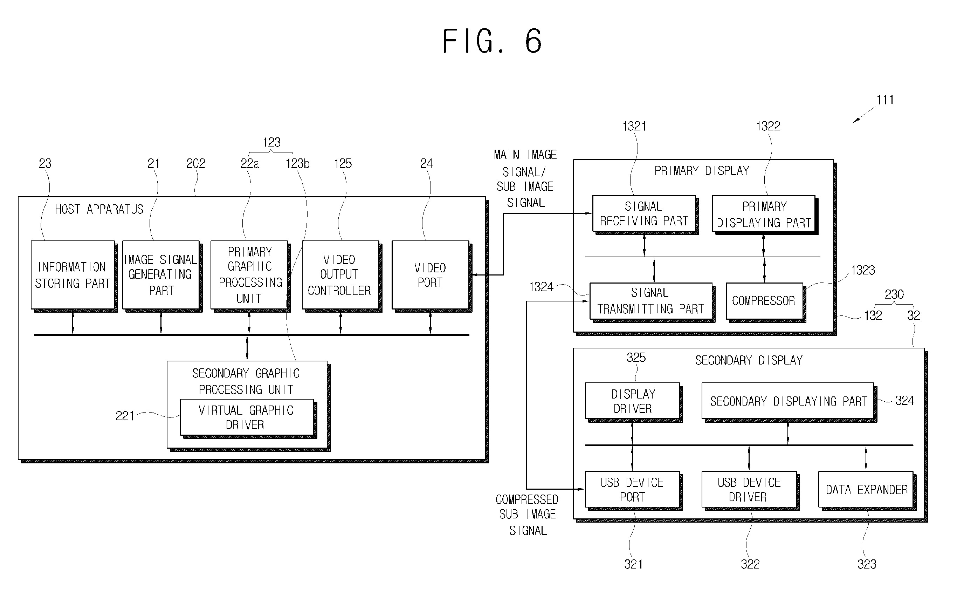

Now, still another embodiment of the present invention will be described. FIG. 4 is a view showing a configuration of a display system 111 according to still another exemplary embodiment of the present invention, and FIG. 6 is a block diagram of the display system 111 according to the still another exemplary embodiment of the present invention. In this embodiment, the same elements denoted by the same reference numerals as the two above-described embodiments have the same operation and functions as the above-described embodiments, and therefore, only differences therebetween will be described.

The display system 111 comprises a host apparatus 202 and a primary display 132. A secondary display 32 is connected to the host apparatus 202 not directly but indirectly via the primary display 132.

The host apparatus 202 comprises a graphic processing unit 123. The graphic processing unit 123 comprises a secondary graphic processing unit 123b. The secondary graphic unit 123b comprises a virtual graphics driver 221, and may not include the data compressor 225, the USB host port 222, the USB host controller 223 and the USB host driver 224, which are shown in FIG. 2.

The host apparatus 202 further comprises a video output controller 125. The video output controller 125 transmits a main image signal processed by a primary graphic processing unit 22a and a sub image signal processed by a secondary graphic processing unit 123b to the primary display 132 via a video port 24. For example, if the video port 24 is DE-15 as a VGA connector, the main image signal may be transmitted along with the compressed sub image signal via several reserved pins.

The primary display 132 comprises a signal receiving part 1312, a primary displaying part 1322, a compressor 1323, and a signal transmitting part 1324. The signal receiving part 1321 receives the main image signal and the sub image signal from the host apparatus 202. The primary displaying part 1322 displays an image based on the main image signal received by the signal receiving part 1321. The compressor 1323 compresses the sub image signal received by the signal receiving part 1321. The signal transmitting part 1324 transmits the sub image signal compressed by the compressor 1323 to the secondary display 32 according a general-purpose data communication standard. It is preferable but not necessary that the signal transmitting part 1324 comprises a USB port (not shown) and a USB controller (not shown).

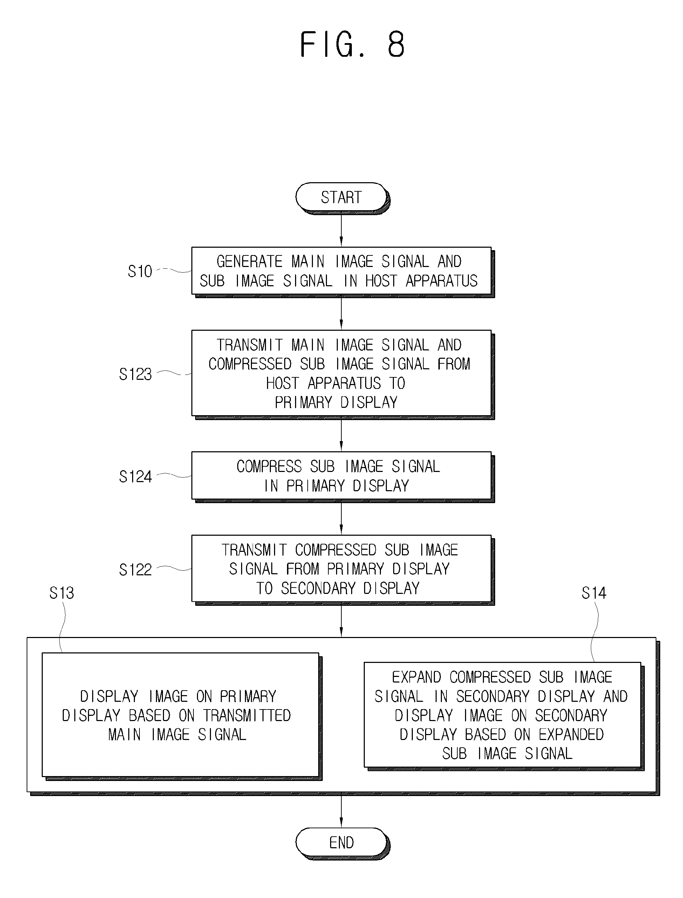

FIG. 8 is a flow chart illustrating an operation of the display system 111 shown in FIGs. 4 and 6. First, the host apparatus 202 generates the main image signal and the sub image signal corresponding to the primary display 132 and the secondary display 32, respectively at the operation S10. Next, the host apparatus 202 transmits the main image signal and the sub image signal to the primary display 132 at operation S123. Next, the primary display 132 compresses the sub image signal at operation S124. Next, the primary display 132 transmits the compressed sub image signal to the secondary display 32 according to a general-purpose data communication standard at the operation S122. Next, the primary display 132 displays an image based on the transmitted main image signal at the operation S13. On the other hand, the secondary display 32 expands the compressed sub image signal and displays an image based on the expanded sub image signal at the operation S14.

As apparent from the description, the present invention provides a display system, a display apparatus, and a display method, which are capable of minimizing expenses incurred for display of an image on an additional display apparatus. That is, since an image signal can be transmitted to the additional display apparatus via a virtual graphics card, expenses incurred to purchase an actual graphic card can be saved.

In addition, the present invention provides a display system, a display apparatus, and a display method, which are capable of reducing hardware requirements for displaying of an image on an additional display apparatus. That is, although the virtual graphics card needs a video connector to transmit an image signal, transfer requirements of the image signal can be released by using a USB port or the like according to a general-purpose data communication standard, thereby further reducing costs. Furthermore, when the USB port or the like is used, the data transfer speed can be maximized by compressing data.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A display system comprising:
a host apparatus that generates a main image signal and a sub image signal;
a compressor that compresses the sub image signal generated by the host apparatus;
a primary display that displays an image based on the main image signal generated by the host apparatus; and
a secondary display that receives the sub image signal compressed by the compressor according to a general-purpose data communication standard, expands the received sub image signal, and displays an image based on the expanded sub image signal.

2. The display system according to claim 1, wherein the general-purpose communication standard comprises a USB protocol.

3. The display system according to claim 1, wherein the compressor is provided in the host apparatus, and
the secondary display is directly connected to the host apparatus to receive the compressed sub image signal.

4. The display system according to claim 1, wherein the compressor is provided in the host apparatus,
the host apparatus transmits the generated main image signal and the compressed sub image signal to the primary display, and
the secondary display receives the compressed sub image signal via the primary display.

5. The display system according to claim 1, wherein the compressor is provided in the primary display, and
the secondary display receives the compressed sub image signal via the primary display.

6. The display system according to claim 1, wherein image data included in the main image signal is same as image data included in the sub image signal.

7. The display system according to claim 1, wherein image data included in the main image signal is different from image data included in the sub image signal.

8. The display system according to claim 1, wherein the host apparatus comprises:
an image signal generating part that generates the main image signal and the sub image signal;
a primary graphic processing unit that performs a graphic process for the main image signal; and
a secondary graphic processing unit that performs a graphic process for the sub image signal by executing a software program.

9. The display system according to claim 8, wherein the host apparatus further comprises an information storing part that stores system registration information, and
the secondary graphic processing unit stores system registration information of the secondary graphic processing unit in the information storing part so that the image signal generating part recognizes the secondary graphic processing unit as a physical device.

10. A display method of displaying an image on a primary display and a secondary display based on a main image signal and a sub image signal, respectively, which are generated in a host apparatus, comprising:
compressing the generated sub image signal;
receiving the compressed sub image signal in the secondary display according to a general-purpose data communication standard;
expanding the received sub image signal in the secondary display; and
displaying an image based on the expanded sub image signal.

11. The display method according to claim 10, wherein the general-purpose communication standard comprises a USB protocol.

12. The display method according to claim 10, wherein the compressing the generated sub image signal is performed by the host apparatus, and
the receiving the compressed sub image signal comprises receiving the compressed sub image signal in the secondary display directly connected to the host apparatus.

13. The display method according to claim 10, wherein the compressing the generated sub image signal is performed by the host apparatus,
the display method further comprising transmitting the generated main image signal and the compressed sub image signal from the host apparatus to the primary display,
the receiving the compressed sub image signal comprises receiving the compressed sub image signal in the secondary display via the primary display.

14. The display method according to claim 10, wherein the compressing the generated sub image signal is performed by the primary display, and
the receiving the compressed sub image signal comprises receiving the compressed sub image signal in the secondary display via the primary display.

15. The display method according to claim 10, wherein image data included in the main image signal is same as image data included in the sub image signal.

16. The display method according to claim 10, wherein image data included in the main image signal is different from image data included in the sub image signal.

17. The display method according to claim 10, wherein the sub image signal is graphically processed by executing a software program in the host apparatus.

18. A display apparatus of a host apparatus that generates a main image and a sub image signal, comprising:
a signal receiving part that receives the sub image signal generated by the host apparatus in a compressed format according to a general-purpose data communication standard;
an expander that expands the compressed sub image signal received by the signal receiving part; and
a displaying part that displays an image based on the image signal expanded by the expander.

19. The display apparatus according to claim 18, wherein the sub image signal is compressed by the host apparatus, and
the signal receiving part is directly connected to the host apparatus to receive the compressed sub image signal.

20. The display apparatus according to claim 18, wherein the sub image signal is compressed by the host apparatus and then is transmitted to the primary display, and
the signal receiving part receives the compressed sub image signal via the primary display.

21. The display apparatus according to claim 18, wherein the sub image signal is compressed by the primary display, and
the signal receiving part receives the compressed sub image signal via the primary display.

22. A display apparatus of a host apparatus that generates a main image signal corresponding to a main image displayed on the display apparatus and a sub image signal corresponding to a sub image displayed on a secondary display, comprising:
a signal receiving part that receives the main image signal generated by the host apparatus and receives the sub image signal generated by the host apparatus in a compressed format;
a displaying part that displays an image based on the main image signal received by the signal receiving part; and
a signal transmitting part that transmits the compressed sub image signal received by the signal receiving part to the secondary display according to a general-purpose data communication standard.

23. A display apparatus of a host apparatus that generates a main image signal corresponding to a main image displayed on the display apparatus and a sub image signal corresponding to a sub image displayed on a secondary display, comprising:
a signal receiving part that receives the main image signal and the sub image signal, which are generated by the host apparatus;
a displaying part that displays an image based on the main image signal received by the signal receiving part;
a compressor that compresses the sub image signal received by the signal receiving part; and
a signal transmitting part that transmits the sub image signal compressed by the compressor to the secondary display according to a general-purpose data communication standard.

24. The display apparatus according to claim 18, wherein the general purpose communication standard is the USB.

25. The display apparatus according to claim 18, wherein the general purpose communication standard is the IEEE 1394.

26. The display apparatus according to claim 18, wherein the compression standard is an MPEG-2 standard.

27. The display apparatus according to claim 18, wherein the compression standard is an MPEG-4 standard.

28. The display apparatus according to claim 18, wherein the compression standard is an H.264 standard.

29. A display apparatus capable of being connected to a host apparatus which generates an image signal displayable on the display apparatus comprising:
a signal receiving part having a port for receiving an image signal generated by the host apparatus by utilizing a general purpose interface standard;
a display driver that processes the received image signal to be displayed on a display part; and
a display part for displaying the image signal in accordance with an output of the display driver.

30. The display apparatus according to claim 29, wherein the general purpose interface standard is the USB standard.

31. The display apparatus according to claim 29, wherein the general purpose interface standard is the IEEE 1392 standard.

32. The display apparatus according to claim 29, wherein the host apparatus is a computer having an operating system.

33. The display apparatus according to claim 32, wherein the computer is a PC.

34. The display apparatus according to claim 29, wherein the host apparatus is a settop box.

35. The display apparatus according to claim 29, wherein the received image signal is a compressed image signal.

36. The display apparatus according to claim 35, wherein the compressed image signal is compressed in accordance with one of the MPEG-2, MPEG-4 or H.263 standard.

37. A host apparatus for generating image signal comprising:
an image signal generating part;
a virtual graphics driver for processing the image signal generated by the image signal generating part;
a port that transmits the processed image signal, the processed image signal capable of being viewed on an external display apparatus; and
an port controller that controls the port to transmit the image signal;
wherein a general purpose communication standard is utilized to transmit the image signal.

38. The host apparatus according to claim 37, wherein the general purpose communication standard is one of the USB or IEEE-1394 standard.

39. The host apparatus according to claim 37, wherein another image signal is generated by the image signal generating part and the another image signal is simultaneously output with the image signal.

40. The host apparatus according to claim 39, wherein the image signal is output via one of the USB and/or IEEE 1394 port and the another image signal is output via one of the DSUB, DVI and/or HDMI video port.
